# EUROPEAN PATENT APPLICATION

(11) **EP 4 588 338 A1**
(43) Date of publication of application: **23.07.2025**
(21) Application number: 25151652.2
(22) Date of filing: 14.01.2025
(51) Int. Cl.: A01G 7/04, A01G 22/00

(54) **LIGHTING METHOD AND SYSTEM**

(30) Priority: 16.01.2024 EP 24152019
(71) Applicant: Signify Holding B.V., 5656 AE Eindhoven (NL)
(72) Inventor: NICOLE, Celine, Catherine, Sarah, 5656 AE Eindhoven (NL); DE CARVALHO, Sabrina, Almeida, 5656 AE Eindhoven (NL)
(74) Representative: Vanden Wyngaert, Hilbrand

(57) **Abstract**

The present disclosure relates to a horticultural lighting method and corresponding system. The horticultural lighting method to cultivate plants comprises: generating overhead lighting; and controlling the overhead lighting by restricting a red light component in the overhead lighting to below a predetermined intensity threshold, above which at least a portion of the plants is prone to discoloration. The method further comprises generating inter-canopy lighting; and controlling at least the inter-canopy lighting by increasing intensity of the red light components therein to at least approximately compensate for restricting of the red light component in the overhead lighting.

## Description

### FIELD OF THE INVENTION

The present disclosure relates to the field of lighting systems and associated or corresponding methods for the cultivation of specific types of plants, amongst which hop, tea and cannabis.

### BACKGROUND OF THE INVENTION

For example, plants of the genus Cannabis ("cannabis") are flowering annual plants, which includes at least the species Cannabis sativa. Cannabis indica and Cannabis ruderalis are either seen as sub-species/varieties of Cannabis sativa, or as separate species (under the genus Cannabis) in their own right.

Cannabis flowers produce valuable phytochemicals as a by-product, such as terpenes and cannabinoids (such as THC and CBD). It is known to use several of these phytochemicals to relieve the symptoms of a number of medical conditions, such as relieving pain and/or preventing nausea. There is a worldwide interest in the medical use of cannabis, and an increasing trend towards legalizing the medical use of cannabis.

It is usually considered necessary to grow cannabis under controlled circumstances to be able to guarantee a sufficient quality for medicinal purposes. For this reason, growth mostly takes place in greenhouses or indoor (i.e. without daylight). For improved and repeatable quality, e.g. improved and reproducible phytochemical content, supplemental light (e.g. provided by an LED arrangement) is often used.

A typical growth cycle of a cannabis plant in a commercial greenhouse or indoor setting consists of several distinguishable growth phases. Plants begin in the seedling phase, in which young plants are propagated from seeds or from cuttings taken from a female mother plant. Plants then move to the vegetative phase, in which the female plants are transplanted to a lower plant density and grown to a certain degree of maturity. This is called the vegetative phase. After the vegetative phase, there is a flowering phase that start with a transition to the reproductive phase (i.e. flowering). Cannabis plants are so-called short-day plants. They start flowering when the photoperiod is shortened. To induce flowering, the photoperiod is shortened to typically 12 hours per day. At the end of the flowering phase, the flowers are harvested. In this process, the plants are destroyed.

Medical cannabis cultivation is more and more performed in indoor environments, especially in totally controlled environment under artificial lighting. Light intensities during the flowering phase of cultivation are as high as 1000 µmol/(m²s) or even 1500 µmol/(m²s).

The use of LED lighting horticulture with the most efficient spectra drives the cannabis plant to stress at its meristem, i.e. the tip of the flowering branches, causing the flowers at the top to grow a white top/white tip instead of their usual green/purple inflorescence. This white tip syndrome causes flower yield loss and revenue loss, as the flower that has the stress is also the most valuable in the market but with the white tip it becomes unsalable.

Growers identify this white top effect as photobleaching. However Photobleaching is generally defined as: "Prolonged exposure to excess light that causes photoinhibition, that is decrease in photosynthetic activity, followed by chlorosis - bleaching of chlorophylls (Chl) - and ultimately death." ( Lingvay et al. 2020). White tips forming the issue underlying the present disclosure do not fit this definition, as plants show a white meristem (no chlorophyll presence from start) that continues to grow white without detriment to plant health (personal observations and grower trial observations, for example, Medicinal Harvest) or chemistry. The mechanism for this white tip is, as far as the creators of the present disclosure can determine from extensive research, new and unknown to peer-review science. In literature some mutant plants in the field of tea have shown that they grow albinic shoots under particular conditions such as high light (intensity) levels for tea plants. No studies have been found in scientific literature or in patent publications, that provide an explanation of any specific mechanism underlying the present disclosure, other than the apparently erroneous finding that discoloration is caused by unwanted decrease of photosynthetic activity. Neither have attempts to discuss the matter with researchers in this field resulted in clear explanations of what this white tip physiological mechanism actually is. Therefore, white tipped cannabis plants have in the past been rejected, quite possibly erroneously.

Lighting systems for the particular group of plants in question, in general are known, for example from US-2020/0390039, exemplifying overhead and inter-canopy lighting. However, this publication doesn't address the above described issue of white tips, nor does it provide any solution.

Further, WO-2022/189322 (in the same name as (some of) the creators of the present disclosure) relates to a trade off of lowering intensities, while achieving higher crop yield through longer photoperiods per day (light being emitted to the plants during the day) in the flowering phase. The photoperiods may even, according to this prior art disclosure, vary in the course of the flowering phase, from 12 hours at the beginning of the flowering phase leading up to photoperiods of at least approximately 16 hours per day in the 7^{th} week of the flowering phase (preceded by up to 6 week of a seedling phase and a vegetative phase. and followed by destructive harvesting).

However, in the field of the present disclosure, a trend is emerging which is to deploy lighting with the highest attainable intensities (in PPFD terms), possibly combined with varying (increasing in time) intensities in the flowering phase, since this has proven to be able to provide an even higher yield, but which higher yield is jeopardized by the above described phenomenon of white tip formation (white flowers at the top of plants, that are justly or incorrectly attributed to a decrease in photosynthetic activity and - in the case of cannabis - a resulting decrease in efficacy. The discoloration (whitening) of flowers in the tops of cannabis plants should be prevented and/or avoided, even though a cause or effect in terms of efficacy thereof are unproven and/or undocumented. However, literature and common general knowledge acknowledged no cause for the detected discoloration, and - moreover - no indication of decreased efficacy of medicaments derived from discoloured blooms of (cannabis) plants. Nevertheless, the present disclosure is aimed at avoiding or preventing discoloration (whitening) of blooms at tops of (cannabis) plants, rather than entering into a discussion about efficacy of discoloured (whitened) blooms, if technically and economically feasible.

### SUMMARY OF THE INVENTION

The system according to the present disclosure provides a number of improvements over the prior art.

The creators of the present disclosure have, after diligent and confidential research, been able to identify the cause of discoloration / whitening of flowers in the tops of (cannabis) plants, and have thereon been able to devise an improvement and/or maybe even a remedy, in a horticultural lighting method to cultivate plants, comprising:
- generating overhead lighting;
- controlling the overhead lighting by restricting a red light component in the overhead lighting to below a predetermined intensity threshold, above which at least a portion of the plants is prone to discoloration;
- generating inter-canopy lighting; and
- controlling at least the inter-canopy lighting by increasing intensity of the red light component therein to at least approximately compensate for restricting of the red light component in the overhead lighting.

In a preferred embodiment, the method may exhibit the feature that the plant is of the genus Cannabis.

In an alternative or additional embodiment, the method may exhibit the feature of setting the intensity threshold for the red light component at wavelengths in a range of 650-700nm..

In an alternative or additional embodiment, the method may exhibit the feature of setting the intensity threshold for the red light component to at most 550 µmol/(m²s) PPFD.

In an alternative or additional embodiment, the method may exhibit the feature of restricting the red light component to below the intensity threshold during a flowering phase, in which bloom formation is induced. Then, the method may further exhibit the feature of generating overhead and inter-canopy lighting in the flowering phase during a photoperiod of at least approximately 12 hours per day. In the flowering phase, an unrestricted intensity of red light component in the overhead lighting may be at least 640 µmol//m2/s up to 1200 µmol//m2/s in a total lighting of between 800 and 1500 µmol//m2/s.

An unrestricted intensity of red light component in the overhead lighting during at least a portion of a vegetative phase preceding the flowering phase may be at least 560 µmol//m2/s in a total lighting of at least 800 µmol//m2/s.

Here above, the reference to total lighting intensity is however in the PAR.

In an alternative or additional embodiment, the method may exhibit the feature that the total light intensity of overhead lighting with a restricted red light components and of inter-canopy lighting with an increased intensity of the red light components is at least approximately equal to or higher than a total light intensity without restriction of the red light component in the overhead lighting in combination with the inter-canopy lighting without increasing the intensity of the red light components.

In an alternative or additional embodiment, the method may exhibit the feature that overhead lighting provides 550 µmol/m2/s light intensity of the red light component and the inter-canopy lighting provides at least 350 µmol/s/m2 light intensity of the increased red light component.

In an alternative or additional embodiment, the method may exhibit the feature that inter-canopy lighting is provided on at least two height levels.

In an embodiment with overhead lighting generating a light intensity of 550 µmol/(m² s), and wherein inter-canopy lighting is provided on at least two height levels, inter-canopy lighting provides at least 350 µmol/m2/s light intensity of the increased red light component at each of the at least two height levels.

Further, the present disclosure relates to a horticultural lighting system, configured to cultivate plants, comprising:
- overhead illumination;
- inter-canopy illumination; and
- a processor configured to control the overhead illumination and the inter-canopy illumination,

wherein a red light component of overhead illumination is restricted to below an intensity threshold, above which plants are prone to a discoloration, and
wherein at least the inter-canopy lighting is controlled by increasing intensity of the red light components therein to at least approximately compensate for restricting of the red light component in the overhead lighting.

### BRIEF DESCRIPTION OF THE DRAWING

In the appended drawing, embodiments of the present disclosure and components thereof are shown, wherein the same or similar elements, components and functional aspects may be designated throughout the drawing with the same or similar reference signs and wherein:
Figure 1 exhibits an overhead illumination recipe according to the present disclosure;
Figure 2 exhibits a schematic configuration of an embodiment of a horticultural lighting system according to the present disclosure;
Figure 3 exhibits intensity of red light component in illumination from a number of armatures from the applicant of the present disclosure for overhead illumination, as well as restricting the same;
Figure 4 exhibits an increase in crop yield achievable through the present disclosure; and
Figure 5 exhibits a flow chart of a method according to the present disclosure; and
Figure 6 exhibits an exemplary data processing system to control the horticultural lighting system.

### DETAILED DESCRIPTION OF EMBODIMENTS

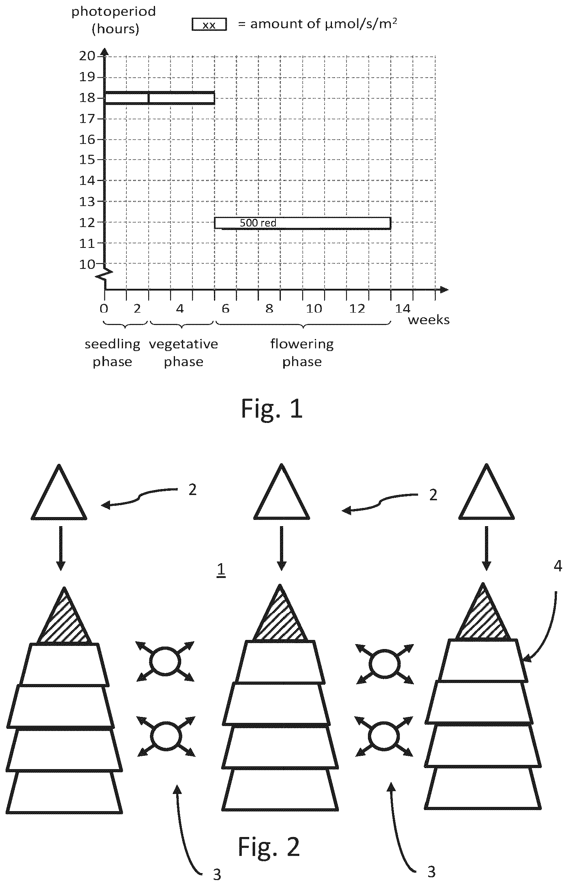

In FIG. 1, an overhead illumination recipe according to the present disclosure is shown, for cannabis plants. During a seedling phase (0 - 2 weeks) and a vegetative state (2 - 5 weeks), overhead or total illumination is set to any appropriate intensity, for example as disclosed in WO-2022/189.322 (acknowledged above as prior art). According to this disclosure, total illumination intensity may amount to 50 µmol/m2/s PPFD in the seedling phase and 200 µmol/m2/s PPFD in the vegetative phase, both during a photoperiod of 18 hours per day. However, this is not a limitation on the scope of protection for the present disclosure.

In the flowering phase(after approx. 5 weeks), and in contrast with or as a refinement of the teachings of WO-2022/189.322, according to the present disclosure, intensity of a red light component in the overhead lighting is restricted to below an predetermined intensity threshold, above which at least a portion of the plants in the group is prone to a discoloration. Such discoloration, as disclosed above, has no effect on an efficacy of the crop, but may be mistaken in the marketplace for decreased photosynthetic activity, followed by chlorosis - bleaching of chlorophylls (Chl) - and ultimately death, rendering the discoloured flowers unsalable. In contrast, discoloration of the flowers (in particular if the plant is of the genus Cannabis, but the same may also apply to tea, hop and the like) does not necessarily result from decreased photosynthetic activity and can be prevented according to the present disclosure.

In current-day lighting methods and systems, overhead lighting usually generates full PAR lighting at intensities between 800 and 1500 µmol/m2/s PPFD. In the vegetative phase normally about 70% thereof is red light component and in the flowering phase normally about 80% thereof is red light component.

If this lighting intensity is emitted from overhead lighting, discoloration of formed flowers may occur.

According to the present disclosure, the red light component (for example 650 - 700 nm) of illumination from the overhead lighting in the flowering phase after approx. 6weeks is restricted to 550 µmol/m2/s PPFD during a photoperiod of at least approximately 12 hours per day. A lower value than 550 µmol/m2/s may be applied instead. A higher value should not be excluded; already at a threshold of 650 µmol/m2/s PPFD a reduction in discoloration is achieved. However, at a threshold of 550 µmol/m2/s PPFD discoloration of flowers is in practice entirely prevented from occurring. Out of an abundance of caution, a threshold at 500 µmol/m2/s PPFD red light component may be employed.

A total intensity of illumination may then still have a value of 800 or 1000 µmol/m2/s PPFD, as taught by WO-2022/1899.322, or even as high as 1500 µmol/m2/s PPFD, as being an option in prior art referenced above, or even higher.

This may be achieved using more green and the blue light components next to the restricted red light component in the overhead lighting. However, this is at the expense of power consumption and costs to the grower, which may not be a disadvantage in regions where energy costs are low, or even where growers are awarded income by energy companies for consuming energy at times at which excess power is being generated (when solar energy contribution on a grid may cause power on the grid to approach overload). Consequently, inter-canopy lighting is not strictly required to achieve the purpose of the present disclosure.

However, in addition to or as an alternative for increased green and blue light components from the overhead lighting, inter-canopy lighting may be employed to compensate for the restricted red light component from the overhead lighting to 550 µmol/m2/s PPFD to attain the desired / higher total intensity illumination during the flowering phase. This allows for the inter-canopy illumination to be richer in red light, reducing power consumption relative to overhead green and blue compensation for the restricted red light component, but goes at the expense of having to install inter-canopy lighting.

FIG. 2 exhibits a schematic configuration of a lighting system 1 according to the present disclosure. The system 1 is configured to cultivate plants, in particular cannabis plants 4, and may also be employed to cultivate tea and/or hop plants. In more detail, the system 1 comprises overhead illumination formed by overhead armatures 2, in particular LED armatures, and inter-canopy illumination formed by armatures 3, in particular LED armatures arranged at two height levels between rows of cannabis plants 4, but armatures for inter-canopy lighting could be provided on one, three or more height levels.

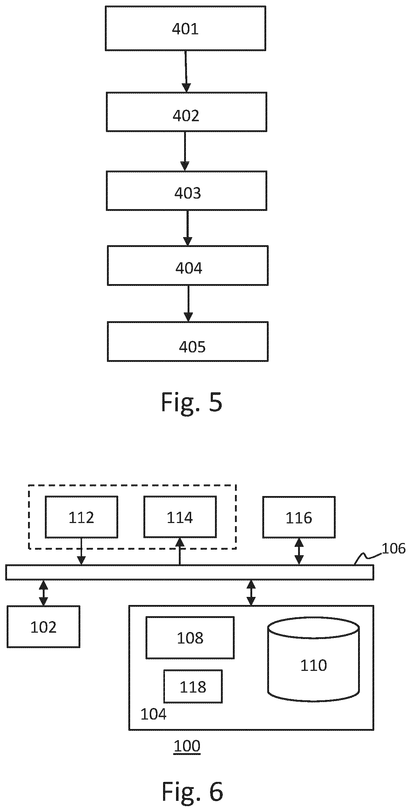

Further, the system 1 comprises a processor configured to control the overhead illumination and the inter-canopy illumination, wherein the processor may be the processor 102 of a data processing system 100, shown in more detail in FIG. 6. The data processing system 100 may be connected to the armatures 2 of the overhead illumination and/or armature 3 of the inter-canopy lighting via any means, such as cables or wirelessly.

As noted above, the processor 102 of the data processing system 100 causes that a red light component of overhead illumination is restricted to below an intensity threshold having an exemplary value of 550 µmol/m2/s PPFD, above which plants (or at least flowers thereof in the case of cannabis) are prone to a discoloration. Further, the processor 102 is configured to cause that at least one of the overhead lighting and the inter-canopy lighting is controlled to at least approximately compensate for restricting of the red light component in the overhead lighting, as set out herein above in relation to FIG. 1.

The conventional use of LED lighting horticulture, such as a recipe known from WO-2022/189.322, with the most efficient spectra drives the cannabis plant to saturating level of photosynthesis (most probably Photosystem II, PSII). The absorption of PSII spectrum shows a maximum at 677 nm, attributable to the antenna chlorophyll a of Photosystem II units, with a shoulder at 670 nm and a smaller maximum at 650 nm, presumably due to chlorophyll a and chlorophyll b of the light-harvesting chlorophyll complex. Therefore the high efficient horticulture light that is rich in red photons (660 nm peak) is directly contributing to the possible high light induced white tip in cannabis plants. While the light being efficient enough to achieve yield and quality at lower intensities, the customer still wants to apply the high level intensities to increase his total yield per cycle. Many data shows that increasing up to 1500 µmol/m2/s the total light intensity allows to produce more flowers per m2 and is then worth the investment for growers. Therefore customer choice goes to less efficient lighting solution with low amount of red and high amount of other color (green). Those solutions are very energy inefficient and also cause a challenge for the cooling of the growth chamber.

The white tips appearance was analyzed and it was concluded that it appeared with a certain level of red photons used in the spectra of the grow light. Above 550 µmol/m2/s of red photons with a photoperiod of 12 h, after a week, white tips will be triggered (Figure 1). When a spectra composition is used with a lower amount of red light, e.g. restricted to 500 µmol/m2/s (replaced / compensated for by blue and green photons), the white tips are not triggered, however the light spectrum is significantly less energy efficient. The formation of discoloration starts to be reduced from 650 µmol/m2/s (and lower). At 550 µmol/m2/s white tip (discolored flowers) are practically entirely prevented.

The applicant's data shows that replacing green by red works well, but for growers using a very high total PPFD (1000, 1220 and 1600 µmol/m2/s), the threshold of red photon flux is still exceeded. Therefore white tips will also occur with a spectra composition which is low in red flux percentage but high in intensity.

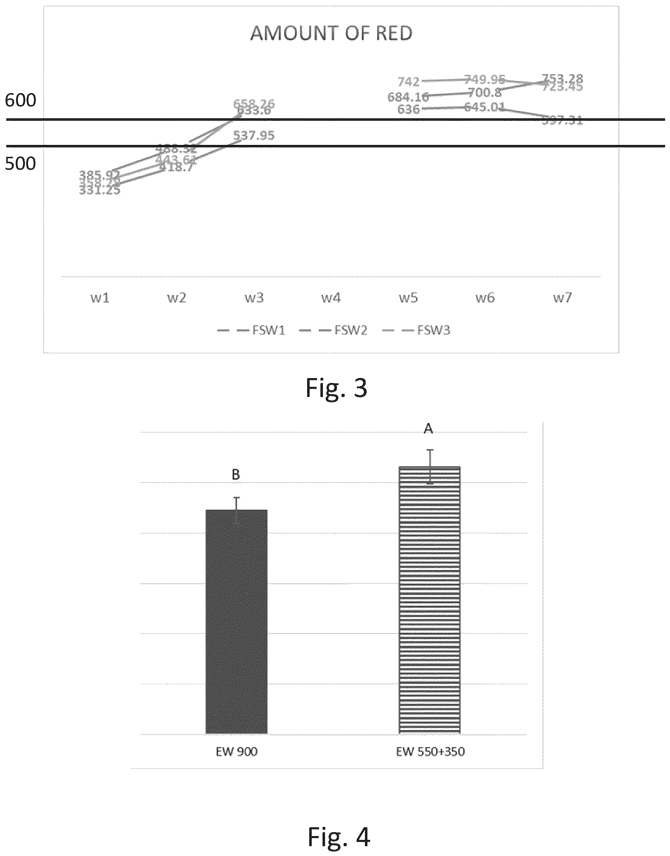

In the example of FIG. 3 showing trials where by crossing the 500-600 µmol/m2/s red photons range by week 3 some level of white tip induction could occur. The phenomenon of white tip formation (flower discoloration) can already be decreased by restricting red light component to 650 µmol/m2/s or there below,, and is practically entirely prevented when restricting the red light component to 550 µmol/m2/s.

Namely, FIG. 3 shows measured red photon intensity in three different tested treatments of Full spectrum white light composition per week of flowering cycle. Full Spectrum White (FSW) is a spectra rich in green and blue but low in red photons. From FIG. 3, it is evident that even with full spectrum white light composition, intensity of red may reach values well above the thresholds according to the present disclosure.

White tips at very high intensity appear with FSW LED spectral composition as : 40-60% Red, 15-22 % Blue and 20-40% green.

While white tips at relatively lower intensity (600 to 900 µmol/m2/s) are appearing with Efficient white spectra composed in the following spectral range: 60-90 % Red, 5-20 % Blue, and 5-20 % green.

This disclosure proposes the smart use of red photons amount at the top of canopy in combination with compensation with either or both of adding overhead green and blue, and inter-canopy lighting using high efficiency LED lighting to increase the total PPFD assimilation by the plant.

According to the present disclosure, when desiring to entirely prevent white tip formation (flower discoloration), overhead lighting spectra should be light which will contain a maximum of 550 µmol/m2/s of red photons applied with a 12 hours photoperiod. In the marketplace, applicant's own and very efficient (3.4 µmol/J) LED lighting is controlled to generate light with 550 µmol/m2/s of red and additional blue and green, this may yield up to a total PAR light level of 560 µmol/m2/s or more. Given that, using inter-canopy lighting with an efficiency of 3.5 µmol/J at one, two or three height levels (two levels are shown in FIG. 2), it's possible to add a maximum of 1100 and a minimum of 600 µmol/m2/s inter-canopy lighting, such that the grower can reach up to 1600 or more (depending on the top lighting spectra) with a high efficiency light fixture of ~3.5 µmol/J.

In a conventional arrangement with only overhead lighting having an intensity of e.g. 900 µmol/m2/s and a red light component therein of more than 550 µmol/m2/s, white tips (discoloration of flowers) occurs in cannabis plants. By restricting red light component from armatures 2 in overhead lighting to 550 µmol/m2/s (in a total of 560 µmol/m2/s), and adding inter-canopy lighting from armatures 3 at one height level (two height levels in FIG. 2) and at a total intensity of 350 µmol/m2/s of total light intensity, white tip formation (discoloration of flowers) is prevented, while total intensity of illumination may be maintained relative to the only-overhead arrangement with 900 µmol/m2/s. By adding inter-canopy lighting on two or more height levels, total yield may be raised to 1250 µmol/m2/s for two height levels, and 1600 µmol/m2/s for three height levels of inter-canopy lighting, and so on.

FIG. 4 shows in column B crop yield with white tip formation when deploying only-overhead lighting at 900 µmol/m2/s in comparison with column A for crop yield (in flower dry weight in grams) with overhead lighting with red light component restriction to 550 µmol/m2/s and one-level inter-canopy lighting 350 µmol/m2/s total lighting intensity; resulting in an increase in crop yield of more than 20%.

When deploying inter-canopy lighting at more height levels, such as two or three height levels, the total amount of lighting administered to the plants may be raised further (to respectively 1250 and 1600 µmol/m2/s).

For example by adding more inter-canopy lighting at more height levels, while using an broad spectrum white (with a possibility to reach 1000 µmol/m2/s on top of a crop in overhead lighting without exceeding the 550 µmol/m2/s red (the rest is composed by blue and green), this allowed the inventors to achieve a 3.0 µmol/J lighting, which brings - in combination with inter-canopy lighting - a very high possible maximum at high efficiency lighting (up to 2050 µmol/m2/s) within reach, while preventing white tip / discoloration of flowers. In this way, the total light intensity of overhead lighting with a restricted red light components and of inter-canopy lighting with an increased intensity of the red light components is at least approximately equal to or higher than a total light intensity without restriction of the red light component in the overhead lighting in combination with the inter-canopy lighting without increasing the intensity of the red light components.

FIG. 5 exhibit a flow chart of a method according to the present disclosure. The method is a horticultural lighting method to cultivate plants.

Step 401 comprises generating overhead lighting.

Step 402 comprises controlling the overhead lighting by restricting a red light component in the overhead lighting to below a predetermined intensity threshold, above which at least a portion of the plants is prone to discoloration.

Step 403 comprises generating inter-canopy lighting.

Step 405 comprises controlling at least one of the overhead lighting and the inter-canopy lighting to at least approximately compensate for restricting of the red light component in the overhead lighting.

FIG. 6 depicts a block diagram illustrating an exemplary data processing system 100 of which the processor may be configured to implement an embodiment of the method according to the present disclosure.

As shown in FIG. 6, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, an external control system referred to herein, or the like. Examples of output devices may include, but are not limited to, a monitor or a display, speakers, the LED driver, or the like. Input and/or output devices may be coupled to the data processing system either directly or through intervening I/O controllers.

In an embodiment, the input and the output devices may be implemented as a combined input/output device (illustrated in FIG. 6 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as, e.g., a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in FIG. 6, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in FIG. 6) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

In one aspect of the present invention, the data processing system 100 may represent a control system of a LED driver as described herein.

In another aspect, the data processing system 100 may represent a client data processing system. In that case, the application 118 may represent a client application that, when executed, configures the data processing system 100 to perform the various functions described herein with reference to a "client". Examples of a client can include, but are not limited to, a personal computer, a portable computer, a mobile phone, or the like.

In yet another aspect, the data processing system 100 may represent a server. For example, the data processing system may represent an (HTTP) server, in which case the application 118, when executed, may configure the data processing system to perform (HTTP) server operations.

While (a) lighting method and system according to the present disclosure has been illustrated and described in detail in the drawings and foregoing description, such illustration and description are to be considered illustrative or exemplary and not restrictive; the invention is not limited to specifically the disclosed embodiments, because scope of protection for the lighting system is not restricted to these embodiments, but is defined in the appended independent claim(s). Any limitation on the scope beyond combined features defined in the appended independent claim(s) is unjustified and unwarranted. The scope is not limited to any embodiment(s) described above and shown in the appended figures, but is limited only by the appended claims.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A horticultural lighting method to cultivate plants, comprising:
- generating overhead lighting;
- controlling the overhead lighting by restricting a red light component in the overhead lighting to below a predetermined intensity threshold, above which at least a portion of the plants is prone to discoloration;
- generating inter-canopy lighting; and
- controlling at least the inter-canopy lighting by increasing intensity of the red light component therein to at least approximately compensate for restricting of the red light component in the overhead lighting.

2. The method as claimed in claim 1, wherein the plant is of the genus Cannabis.

3. The method as claimed in claim 1 or 2, comprising setting the intensity threshold for the red light component at wavelengths in a range of 650-700nm.

4. The method as claimed in claim 1, 2 or 3, comprising setting the intensity threshold for the red light component to at most 550 µmol/m2/s PPFD.

5. The method as claimed in any of the preceding claims, comprising restricting the red light component to below the intensity threshold during a flowering phase, in which bloom formation is induced.

6. The method as claimed in claim 5, comprising: generating overhead and inter-canopy lighting in the flowering phase during a photoperiod of at least approximately 12 hours per day.

7. The method as claims in claim 5 or 6, wherein an unrestricted intensity of red light component in the overhead lighting is at least 640 up to 1200 µmol//m2/s in a total lighting of between 800 and 1500 µmol//m2/s.

8. The method as claims in any of the preceding claims, wherein an unrestricted intensity of red light component in the overhead lighting during at least a portion of a vegetative phase preceding the flowering phase is at least 560 µmol//m2/s in a total lighting of at least 800 µmol//m2/s.

9. The method as claimed in any of the preceding claims, wherein the total light intensity of overhead lighting with a restricted red light component and of inter-canopy lighting with an increased intensity of the red light components is at least approximately equal to or higher than a total light intensity without restriction of the red light component in the overhead lighting in combination with the inter-canopy lighting without increasing the intensity of the red light components.

10. The method as claimed in any of the preceding claims, wherein overhead lighting provides 550 µmol/m2/s light intensity of the red light component and the inter-canopy lighting provides at least 350 µmol/s/m2 light intensity of the increased red light component.

11. The method as claimed in any of the preceding claims, wherein inter-canopy lighting is provided on at least two height levels.

12. The method as claimed in claims 10 and 11, wherein inter-canopy lighting provides at least 350 µmol/m2/s light intensity of the increased red light component at each of the at least two height levels.

13. A horticultural lighting system, configured to cultivate plants, , comprising:
- overhead illumination;
- inter-canopy illumination; and
- a processor configured to control the overhead illumination and the inter-canopy illumination,
wherein the processor is configured to restrict a red light component from the overhead illumination to below a predetermined intensity threshold, above which at least a portion of the plants is prone to a discoloration, and to increase the intensity of the red light components in the inter-canopy illumination to at least approximately compensate for restriction of the red light component in the overhead lighting.
